# EUROPEAN PATENT SPECIFICATION

(11) **EP 1 810 768 B1**
(45) Date of publication and mention of the grant of the patent: **17.07.2013**
(21) Application number: 05721656.6
(22) Date of filing: 30.03.2005
(51) Int. Cl.: B23C 5/24, B23C 5/06

(54) **ROTARY CUTTING TOOL WITH CUTTER BLADE PLAY REGULATION MECHANISM**
DREHSCHNEIDWERKZEUG MIT MECHANISMUS ZUR EINSTELLUNG DES SCHNEIDMESSERSPIELS
OUTIL DE COUPE ROTATIF AVEC MÉCANISME DE RÉGLAGE DU JEU DE LA LAME DE FRAISE

(43) Date of publication of application: 25.07.2007
(73) Proprietor: Sumitomo Electric Hardmetal Corp., Itami-shi, Hyogo 664-0016 (JP)
(72) Inventor: Mizutani, Masanori Sumitomo Electric Hardmetal Co., Itami-shi, Hyogo; 6640016 (JP)
(74) Representative: Grünecker, Kinkeldey, Stockmair & Schwanhäusser
(86) International application number: PCT/JP2005/006067
(87) International publication number: WO 2006/103759

(56) References cited:
- JP-A- 06 155 132
- JP-A- 11 179 610
- JP-A- 2001 219 314
- JP-A- 2005 103 708
- US-A- 4 592 680

## Description

### TECHNICAL FIELD

The present invention relates to a rotary cutting tool such as a face milling cutter or a corner milling cutter having means for adjusting the axial position of the individual throwaway inserts relative to the tool body and to each other. The preamble of claim 1 is based on the document US 4,592,680.

### BACKGROUND ART

In finish milling, it is important to arrange the cutting edges of throwaway inserts with high positional accuracy. Any axial displacement of the cutting edges of the inserts may result in a rough finished surface of the workpiece, chatter, burrs and/or a shortened life of the tool.

There are various proposals for adjusting or eliminating such axial displacement of the cutting edges of inserts, including those disclosed in the following patent documents 1 to 4.
Patent document 1: JP patent publication 2001-252813A
Patent document 2: JP utility model publication 7-27719
Patent document 3: JP utility model publication 3064324
Patent document 4: JP patent publication 2002-516762A

### DISCLOSURE OF THE INVENTION

### OBJECT OF THE INVENTION

Patent document 1 discloses a face milling cutter including a plurality of throwaway inserts. Each insert has its back and one of its side faces that faces toward the axis of the tool seated on insert-mounting seats formed on the tool body. Also, each insert has its other side face that faces toward the proximal end of the tool supported by a pushpin that can be moved by an adjusting screw. In this arrangement, since the pushpins for the respective inserts are moved axially of the tool, no reference positions are set for the respective inserts in the axial direction of the tool. Thus, when the inserts are replaced with new ones, or their positions are changed, it is necessary to adjust the axial positions of all of the inserts. A long time is needed for such adjustment. Instead of such pushpins, some other prior art proposes to use wedges for axially advancing the inserts by moving its tapered surface. This arrangement has the same problem as mentioned above.

Patent document 2 proposes a cutter including an adjusting element fixed to the tool body by means of a wedge and having a resiliently deformable portion. Using the resiliently deformable portion as the reference position of the insert, this portion is resiliently deformed by advancing a bolt threaded into the adjusting element to adjust the axial position of the insert. In this arrangement, since the insert is retracted utilizing the elastic restoring force of the resiliently deformable portion, the axial position of the insert tends to vary, so that adjustment is difficult. When the resiliently deformable portion is deformed, the yield point may be exceeded. Over a long period of use, the resiliently deformable portion tends to be fatigued. Accumulated fatigue could cause the resiliently deformable portion to lose its restoring force or to be damaged.

Patent documents 3 and 4 disclose groove milling cutters having means for adjusting the axial positions of the cutting edges of inserts. Each insert is received in a pocket of which the wall is partially resiliently deformable. A ball is pressed against the resiliently deformable portion of the wall by means of an adjusting screw to move the insert received in the pocket and thus its cutting edge. This arrangement has the same problems as the arrangement of Patent document 2. That is, since the pocket wall does not always return to the original position when the ball is retracted, it may be necessary to apply greater pressure to the wall with the ball next time to advance the cutter to the same position as before. Thus, when the pocket wall is repeatedly deformed, the yield point may be eventually exceeded. If the yield point is exceeded, the pocket wall will never return to its original position. In the worst case, it may be damaged.

Further, in order to uniformly deform the resilient portions of the plurality of pocket walls by applying equal pressures thereto, their thicknesses have to be strictly uniform. In order to form pocket walls having strictly uniform thicknesses, extremely sophisticated and difficult techniques, as well as long time, are needed.

Conventional cutters having mechanisms for adjusting the axial positions of the individual inserts are designed to bear loads applied to the inserts during rough cutting on the adjusting mechanisms themselves. Thus, the inserts cannot be supported reliably. Also, since the axial reference surfaces (displaceable surfaces) tend to fluctuate, it is often necessary to adjust the positions of the reference surfaces even before rough cutting. Such cutters are therefore not suitable for use in rough cutting.

An object of the present invention is to provide a rotary cutting tool which can be used both for rough cutting and finish cutting in a stable manner, and which has means for individually adjusting the axial positions of the cutting edges of a plurality of throwaway inserts which is simple in structure.

### MEANS TO ACHIEVE THE OBJECT

According to the present invention, there is provided a rotary cutting tool according to claim 1.

Preferably, each of the adjusting screw is formed with a head at the one end, the head being formed with an engaging portion for engaging a tool for driving each of the adjusting screws, each of the adjusting screws being threaded into the cutter body from the front end of the cutter body such that the engaging portion is exposed outside, the head having an end face adapted to abut one of the side faces of each of the inserts that faces toward the rear end of the tool body.

### ADVANTAGES OF THE INVENTION

Each insert is positioned axially either by the seating face for axially positioning the insert or by the adjusting screw. During rough cutting, the adjusting screw should be retracted so as to axially position the insert by seating the insert on the seating face for axially positioning the insert. During finish cutting, only an insert or inserts that are axially offset from the other inserts are axially moved and positioned by the corresponding adjusting screws.

During rough cutting, the inserts are positioned by the seating faces of the insert-mounting grooves only without the need for position adjustment using the position adjusting mechanisms (adjustment for canceling any displacement from the reference surfaces). Since three sides of each insert are restrained during rough cutting, rough cutting can be carried out in a stable manner.

Before finish cutting, the inserts are temporarily positioned in the respective insert-mounting grooves to find any insert or inserts that are axially retracted from the most advanced insert or inserts by more than a predetermined distance. Then, only such axially retracted insert or inserts are pushed forward by turning the corresponding adjusting screws. It is not necessary to move all of the inserts. Since the adjusting screws are rigid members having least resilience, they are never resiliently deformed to move and support the inserts. Thus, they can support the inserts much more reliably than conventional resilient adjusting means. Adjustment is made much more quickly, too. Since the adjustment mechanism for each insert is practically a single adjusting screw, it is extremely simple in structure.

A single rotary cutter according to the present invention can be used both for rough cutting and finish cutting. There is no need to prepare two different kinds of cutters for rough cutting and finish cutting. A single cutter would be substantially less expensive than two cutters and its maintenance would be much easier.

### BRIEF DESCRIPTION OF THE DRAWINGS

[Fig. 1] a side view of a rotary cutting tool embodying the present invention
[Fig. 2] a front view of the tool of Fig. 1
[Fig. 3] a partial perspective view of the tool of Fig. 1
[Fig. 4] a partial perspective view of the cutter of Fig. 1 before the throwaway insets have been mounted
[Fig. 5] a partial perspective view of the cutter of Fig. 1, showing its tool body in phantom lines
[Fig. 6] a partial perspective view of a different embodiment

### DESCRIPTION OF REFERENCE NUMERALS

1. Cutter body
2. Throwaway insert
2a. Back
2b, 2c. Side face
3. Clamp means
3a. Clamp screw
3b. Threaded hole
3c. Clamp piece
4. Adjusting screw
4a. Top
4b, 4c. Engaging portions
5. Insert-mounting groove
5a, 5b, 5c. Seating face

### BEST MODE FOR EMBODYING THE INVENTION

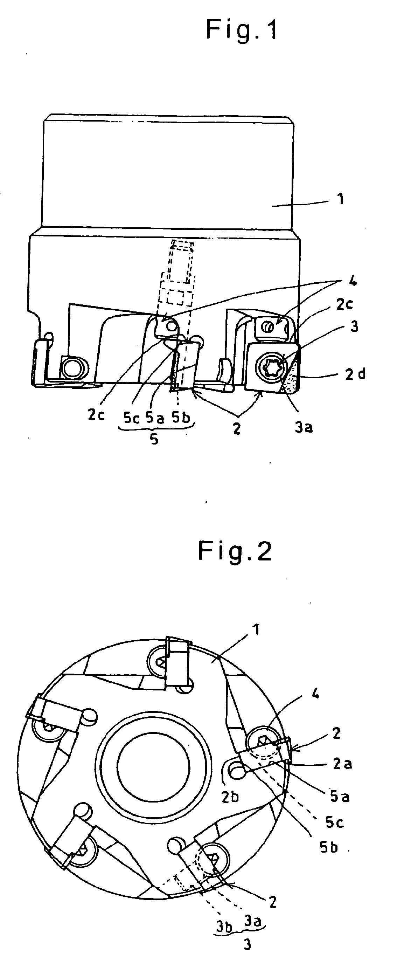

Hereinbelow, the rotary cutting tools embodying the invention are described with reference to Figs. 1 to 6.

Figs. 1-4 show the rotary cutting tool of the first embodiment according to the present invention. The rotary cutting tool shown is a corner milling cutter, which comprises a cutter body 1, throwaway inserts 2, clamp means 3 each fixing one of the inserts 2 to the cutter body 1, and adjusting screws 4 for adjusting the positions of the individual inserts 2.

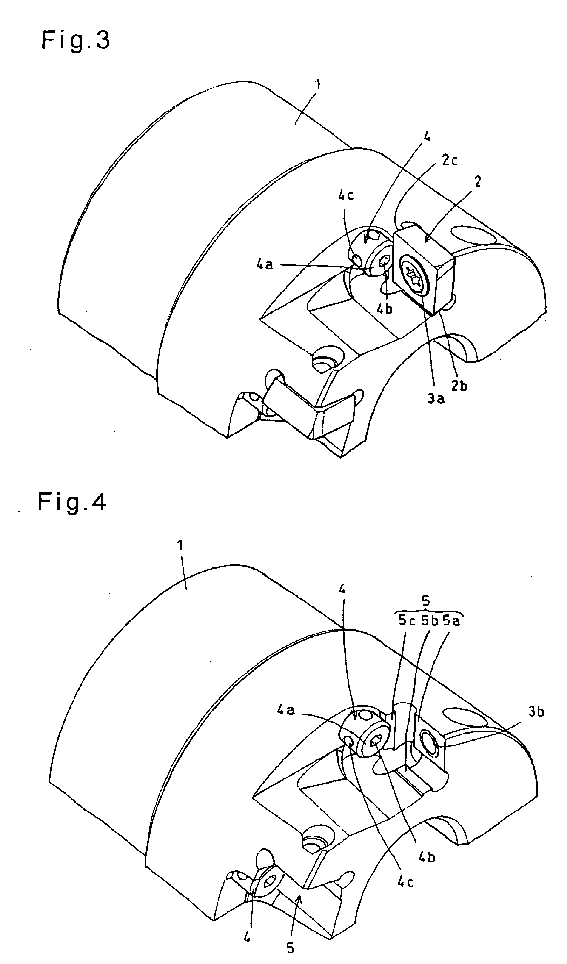

Insert-mounting grooves 5 are formed in the outer periphery of the cutter body 1 at its distal end. As shown in Fig. 4, each groove 5 has three seating faces, i.e. a seating face 5a on which the back 2a of each insert 2 is seated, a seating face 5b on which a side face 2b of each insert 2 that faces toward the axis of the tool is seated, and a seating face 5c on which a side face 2c of each insert that faces toward the proximal end of the tool is seated. The grooves 5 thus restrain the movement of the individual inserts 2 in three directions, i.e. rotational, radial and axial directions of the tool.

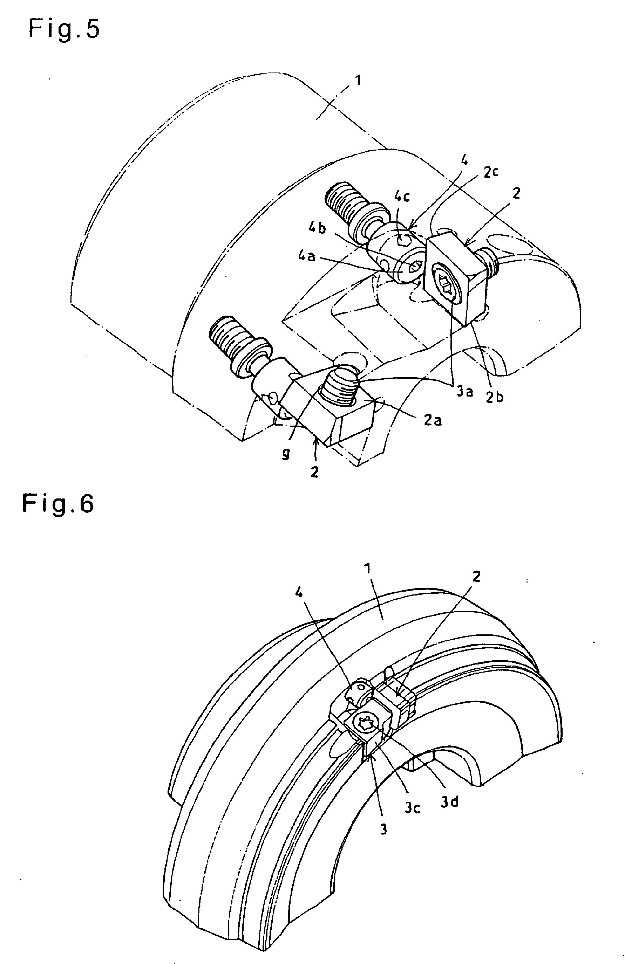

The clamp means 3 each comprise a clamp screw 3a inserted in a countersunk hole formed through the center of each insert 2 and threaded into a threaded hole 3b formed in the seating face 5a of each groove 5 (Fig. 4). By individually tightening the clamp screws 3a, the inserts 2 can be fixed to the cutter body 1. A gap g is present between each clamp screw 3a and the countersunk hole of each insert 2 (Fig. 5) so that the insert 2 is movable relative to the clamp screw 3a.

Each adjusting screw 4 has turning portions (spanner engaging portions) 4b and 4c on the top 4a and side of its head. Each adjusting screw 4 is driven into the tool body 1 near each groove 5 with its head facing toward the distal end of the tool body 1. In this state, the screw 4 has to be turnable in either direction so as to protrude or retract from the seating face 5c. The adjusting screw 4 may be driven into the tool body 1 obliquely relative the axis of the tool so that the top 4a of its head will make surface contact with the side face 2c.

When mounted to the tool body 1, the inserts 2 should be arranged such that their cutting edges are axially offset from one another by a distance not exceeding 10 micrometers, preferably not exceeding 5 micrometers.

The adjusting screws 4 are positioned so that their tops 4a are slightly retracted from the respective seating faces 5c. In this state, the inserts 2 are set in the respective grooves 5 with their backs 2a and adjacent side faces 2b and 2c seated on the seating faces 5a to 5c of the respective grooves 5, and then the clamp screws 3a are passed through the countersunk holes of the respective inserts 2 and threaded into the threaded holes 3b to securely fix the inserts 2 to the tool body 1. In this state, if each insert can be axially positioned suitably, its side face 2c may be in contact with the top 4a of the head of the adjusting screw 4.

In this state, workpieces are cut roughly. Then, the workpieces are finished. In finishing the workpieces, if it is necessary to narrow the axial displacement of the cutting edges of the inserts, with the backs 2a and side faces 2b and 2c of the respective inserts 2 pressed against the seating faces 5a to 5c, the clamp screws 3a are loosened, and then, any insert or inserts of which the cutting edges retract from the cutting edge of the most advanced one of the inserts are advanced axially by turning the corresponding adjusting screws 4 until their cutting edges substantially align with the cutting edge of the most advanced insert in a direction perpendicular to the axis of the tool.

The clamp means 6 of the embodiment of Fig. 6 each comprise a clamp piece (wedge) 3c and a driving screw 3d for driving the wedge 3c radially inwardly and outwardly. This invention is applicable to a face mill cutter as well.

In the embodiment, the adjusting screws 4 are turned by inserting a screwdriver from the distal end (front end) of the tool. But instead, the turning tool 4 may be structured such that the adjusting screws 4 are turned by inserting a screwdriver from the proximal end (rear end) of the tool.

The inserts 2 of the invention are not particularly limited. For example, they may have their cutting edges formed of sintered diamond members 2d brazed to their substrates as shown in Fig. 1, or the sintered diamond members of Fig. 1 may be replaced with sintered cBN members. Also, the entire inserts 2 may be formed of cemented carbide as shown in Fig. 3.

## Claims

1. A rotary cutting tool comprising a tool body (1) formed with a plurality of insert-mounting grooves (5) in an outer periphery thereof at a front end thereof, throwaway inserts (2) each having a cutting edge (2d), a back face (2a) and four side faces (2b, 2c), and received in one of said insert-mounting grooves (5), clamp means (3) each for detachably securing one of said inserts (2) to said tool body (1), adjusting screws (4) each for adjusting axial position of one of said inserts (2), each of said adjusting screws (4) being threadedly engaged in said tool body (1) so as to extend substantially in the axial direction of said tool near one of said insert-mounting grooves (5)
**characterized in that**
insert-mounting grooves (5) each having first to third seating faces (5a, 5b, 5c) for positioning one of said inserts (2) in rotational, radial and axial directions of said tool (1) by coming into contact with said back face (2a) and two adjacent ones (2b, 2c) of said four side faces, respectively,
each of said adjusting screw (4) has a top end (4a) and is movable axially in either direction between a rough cutting position in which the inserts (2) should be arranged such that their cutting edges (2d) are axially offset from one another and a finish cutting position to which said top end (4a) is advanced axially by turning the corresponding adjusting screw (4) such that the inserts (2) seated on the respective third seating faces (5c), are advanced axially until their cutting edges (2d) substantially align with the cutting edge (2d) of the most advanced insert (2) in a direction perpendicular to the axis of the tool.

2. The rotary cutting tool of claim 1 wherein each of said adjusting screw is formed with a head at said one end, said head being formed with an engaging portion for engaging a tool for driving each of said adjusting screws, each of said adjusting screws being threaded into said cutter body from the front end of said cutter body such that said engaging portion is exposed outside, said head having an end face adapted to abut one of said side faces of each of the inserts that faces toward the rear end of said tool body.

## Patentansprüche

1. Dreh-Schneidwerkzeug, das einen Werkzeugkörper (1), der mit einer Vielzahl von Einsatz-Anbringungsnuten (5) in seinem Außenumfang an seinem vorderen Ende versehen ist, Wendeeinsätze (2), die jeweils eine Schneidkante (2d), eine hintere Fläche (2a) sowie vier seitliche Flächen (2b, 2c) aufweisen und in einer der Einsatz-Anbringungsnuten (5) aufgenommen sind, Klemmeinrichtungen (3), mit denen jeweils einer der Einsätze (2) lösbar an dem Werkzeugkörper (1) befestigt wird und Einstellschrauben (4) umfasst, mit denen jeweils die axiale Position eines der Einsätze (2) eingestellt wird, wobei jede der Einstellschrauben (4) so mit dem Werkzeugkörper (1) in Gewindeeingriff ist, dass sie sich im Wesentlichen in der axialen Richtung des Werkzeugs in der Nähe einer der Einsatz-Anbringungsnuten (5) erstreckt,
**dadurch gekennzeichnet, dass**
die Einsatz-Anbringungsnuten (5) jeweils erste bis dritte Aufnahmeflächen (5a, 5b, 5c) haben, mit denen einer der Einsätze (2) in Dreh-, Radial- und Axial-Richtung des Werkzeugs (1) positioniert wird, indem sie jeweils mit der hinteren Fläche (2a) und zwei benachbarten (2b, 2c) der vier seitlichen Flächen in Kontakt kommen,
jede der Einstellschrauben (4) ein oberes Ende (4a) hat und axial in beiden Richtungen zwischen einer Grobschnitt-Position, in der die Einsätze (2) so angeordnet sein sollten, dass ihre Schneidkanten (2d) axial zueinander versetzt sind, und einer Feinschneid-Position bewegt werden kann, an die das obere Ende (4a) axial bewegt wird, indem die entsprechende Einstellschraube (4) so gedreht wird, dass die an den jeweiligen dritten Aufnahmeflächen (5c) aufgenommenen Einsätze (2) axial bewegt werden, bis ihre Schneidkanten (2d) im Wesentlichen mit der Schneidkante (2d) des am weitesten bewegten Einsatzes (2) in einer Richtung senkrecht zu der Achse des Werkzeugs fluchtend ist.

2. Dreh-Schneidwerkzeug nach Anspruch 1, wobei jede der Einstellschrauben mit einem Kopf an dem einen Ende versehen ist, der Kopf mit einem Eingriffsabschnitt zum Eingreifen mit einem Werkzeug versehen ist, mit dem jede der Einstellschrauben gedreht wird, jede der Einstellschrauben von dem vorderen Ende des Schneidkörpers her so in den Schneidkörper eingeschraubt wird, dass der Eingriffsabschnitt nach außen freiliegt, und der Kopf eine Endfläche hat, die so eingerichtet ist, dass sie an einer der seitlichen Flächen jedes der Einsätze anliegt, die dem hinteren Ende des Werkzeugkörpers zugewandt ist.

## Revendications

1. Outil de coupe rotatif comprenant un corps d'outil (1) conformé avec une pluralité de rainures de montage d'inserts (5) ménagées dans sa périphérie extérieure à son extrémité avant, des inserts jetables (2) ayant chacun un bord de coupe (2d), une face dorsale (2a) et quatre faces latérales (2b, 2c) et étant chacun reçus dans une desdites rainures de montage d'inserts (5), des moyens de serrage (3) servant chacun à fixer de manière amovible un desdits inserts (2) sur ledit corps d'outil (1), des vis d'ajustage (4) servant chacune à ajuster la position axiale d'un desdits inserts (2), chacune desdites vis d'ajustage (4) étant vissée dans ledit corps d'outil (1) de façon à s'étendre sensiblement dans la direction axiale dudit outil près d'une desdites rainures de montage d'inserts (5),
- **caractérisé en ce que** :
- les rainures de montage d'inserts (5) comportent chacune des première à troisième faces d'appui (5a, 5b, 5c) pour positionner un desdits inserts (2) dans les directions rotationnelle, radiale et axiale dudit outil (1) en venant au contact de ladite face dorsale (2a) et de deux faces adjacentes (2b, 2c) parmi lesdites quatre faces latérales, respectivement ; et
- chacune desdites vis d'ajustage (4) comporte une extrémité supérieure (4a) et est mobile axialement dans l'une ou l'autre direction entre une position de coupe grossière, dans laquelle les inserts (2) doivent être agencés de sorte que leurs bords de coupe (2d) soit axialement décalés les uns par rapport aux autres, et une position de coupe de finition, vers laquelle ladite extrémité supérieure (4a) est avancée axialement, en tournant la vis d'ajustage (4) correspondante de sorte que les inserts (2), appuyés contre les troisièmes faces d'appui (5c) respectives, soit avancés axialement jusqu'à ce que leurs bords de coupe (2d) s'alignent sensiblement avec le bord de coupe (2d) de l'insert (2) le plus avancé dans une direction perpendiculaire à l'axe de l'outil.

2. Outil de coupe rotatif selon la revendication 1, dans lequel chacune desdites vis d'ajustage est conformée avec une tête à ladite extrémité, ladite tête étant conformée avec une partie d'engagement pour engager un outil pour entrainer chacune desdites vis d'ajustage, chacune desdites vis d'ajustage étant vissée dans ledit corps d'outil de coupe à partir de l'extrémité avant dudit corps d'outil de coupe, de sorte que ladite partie d'engagement soit exposée à l'extérieur, ladite tête comportant une face d'extrémité adaptée à venir en butée contre une desdites faces latérales de chacun des inserts, qui est dirigée vers l'extrémité arrière dudit corps d'outil.
